# EUROPEAN PATENT SPECIFICATION

(11) **EP 0 458 248 B1**
(45) Date of publication and mention of the grant of the patent: **17.08.1994**
(21) Application number: 91108153.7
(22) Date of filing: 21.05.1991
(51) Int. Cl.: B41J 29/02, B41J 29/04, F16B 21/00

(54) **Mounting apparatus**
Befestigungsvorrichtung
Appareil pour montage

(30) Priority: 21.05.1990 US 526468
(43) Date of publication of application: 27.11.1991
(73) Proprietor: AT&T GLOBAL INFORMATION SOLUTIONS INTERNATIONAL INC., Dayton, Ohio 45479 (US)
(72) Inventor: Whittaker, Sean Eric, Brooktondale, New York 14817 (US)
(74) Representative: Robinson, Robert George

(56) References cited:
- GB-A- 1 414 085
- US-A- 4 243 342
- US-A- 4 616 944
- US-A- 4 632 594

## Description

This invention relates to apparatus for mounting a device on a supporting member.

One use for such a mounting apparatus is in the field of printers, in which it is common to mount an electric motor on a printer housing to drive certain elements of the printer, such as a print head carriage in wire matrix printers. In such an arrangement, it is most helpful if the motor can be quickly assembled to, and disassembled from, the printer housing, in order to facilitate initial assembly, as well as subsequent removal of the motor for repair or replacement when needed.

An object of the present invention is to provide a simple and effective apparatus for mounting a device on a supporting member.

Another object is to provide apparatus for securing an electric motor to a printer housing.

According to the present invention there is provided an apparatus for securing a device to a support member having a planar receiving surface, said device including a mounting flange having first and second opposed edges and third and fourth opposed edges, characterized in that said support member includes first and second retaining means on said support member for respectively receiving and retaining said first and second opposed edges, a stop member on said support member for limiting movement of said mounting flange with respect to said support member, and a resilient latch member on said support member which normally projects outwardly from the plane of said receiving surface of said support member, but which is arranged to be depressed by engagement with said mounting flange to enable said mounting flange to move thereover, whereby said mounting flange may be placed on said planar receiving surface of said support member so as to depress said latch member and then moved, while engaged with said receiving surface, to a fixed position at which said first and second opposed edges are received and retained by said first and second retaining means, and said flange is held against further movement in a first direction by said third edge engaging said stop member, said mounting flange being arranged to move past said resilient latch member when moved to said fixed position so as to enable said latch member to snap outwardly and thereby hold said flange against movement in a direction opposite to said first direction by engagement of said latch member with said fourth edge.

The present invention has the advantage of easily securing a motor to a housing without using bolts.

An embodiment of the present invention will now be described with reference to the accompanying drawings, in which:-
Fig. 1 is a plan view showing the initial placement of an electric motor and attached mounting flange on a printer housing for attachment thereto;
Fig. 2 is a view similar to Fig. 1 in which the electric motor and associated mounting flange have been rotated into a position in which they are securely attached to the printer housing;
Fig. 3 is a perspective view showing the motor and flange in the position of Fig. 2, with respect to the printer housing;
Fig. 4 is a fragmentary perspective detail view of the latching member in operative engagement with the mounting flange; and
Fig. 5 is a fragmentary perspective detail view of the stop member in operative engagement with the mounting flange.

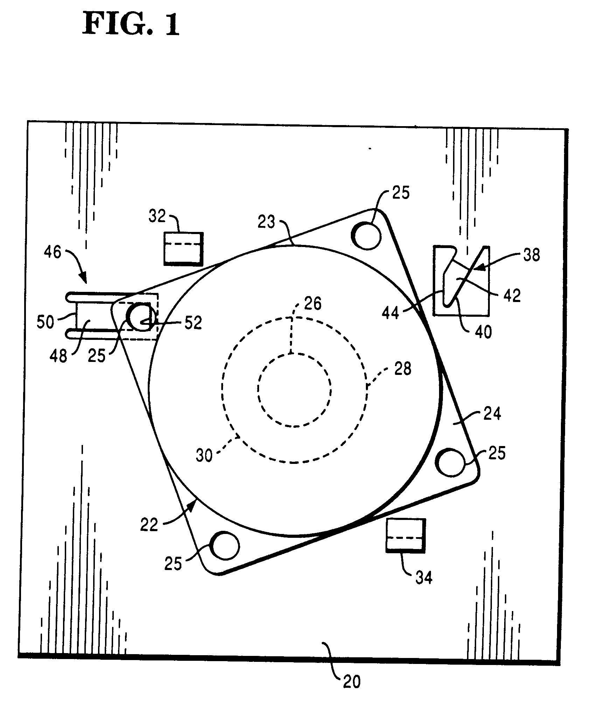

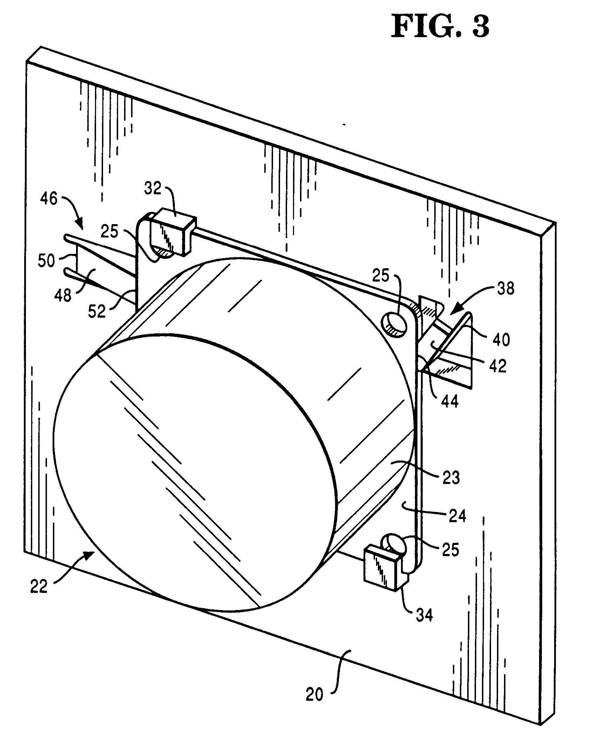

Referring now to Figs. 1 to 3, shown there is a support member 20 which may be a portion of a printer housing, and will henceforth be referred to as such. The support member 20 may, of course, be a complete printer housing or may be a plate or element which forms a part of a complete housing. The housing may be made of a plastic material, and may be formed by any suitable method, such as an injection molding process, though other materials and means of fabrication may also be employed, if desired. The surface of the housing 20 in this area is flat or planar in nature. Positioned adjacent to the printer housing 20 is a device 22 which may be an electric motor and will henceforth be referred to as such. Attached to a cylindrical housing 23 for the motor 22 is a rectangular mounting flange 24 which has a flat surface for engaging the flat surface of the printer housing 20. A plurality of bolt holes 25 are found on the flange 24. These may be used when the motor is bolted to a frame or support, but are not used in the present invention. The motor 22 includes a shaft or pinion 26 which extends through an opening 28 in the flange 24, and an opening 30, which is shown in the illustrated embodiment as being of the same size as the opening 28, in the housing 20. The shaft or pinion 26 may engage with a complementary gear or other mechanism (not shown) within the printer housing 20 to drive suitable mechanism, such as a print head carriage (not shown).

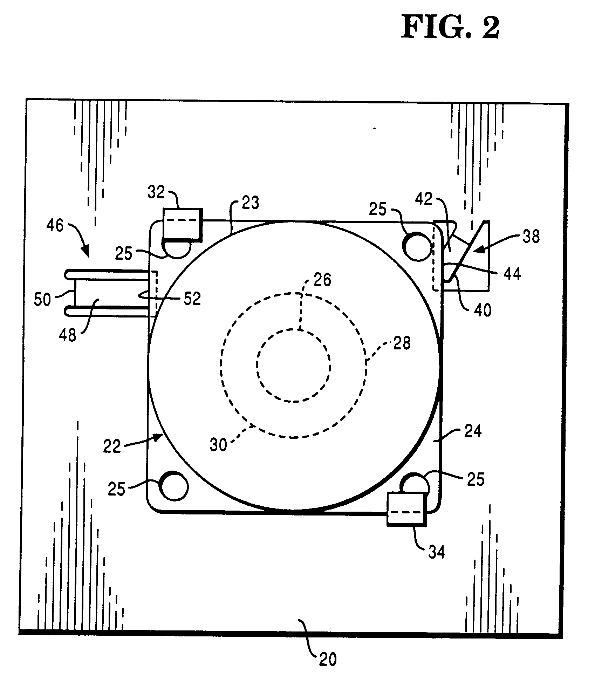

Two L-shaped clips or retaining members 32 and 34 define slots and are shown as formed integrally with the housing 20 in positions to receive portions of the mounting flange 24. These clips could be made separately and attached to the housing 20 if desired. As may best be seen in Fig. 2, the members 32 and 34 are positioned on a line which forms a diagonal of the rectangular mounting flange 24, and extends generally through the centre of the shaft or pinion 26 and the openings 28, 30.

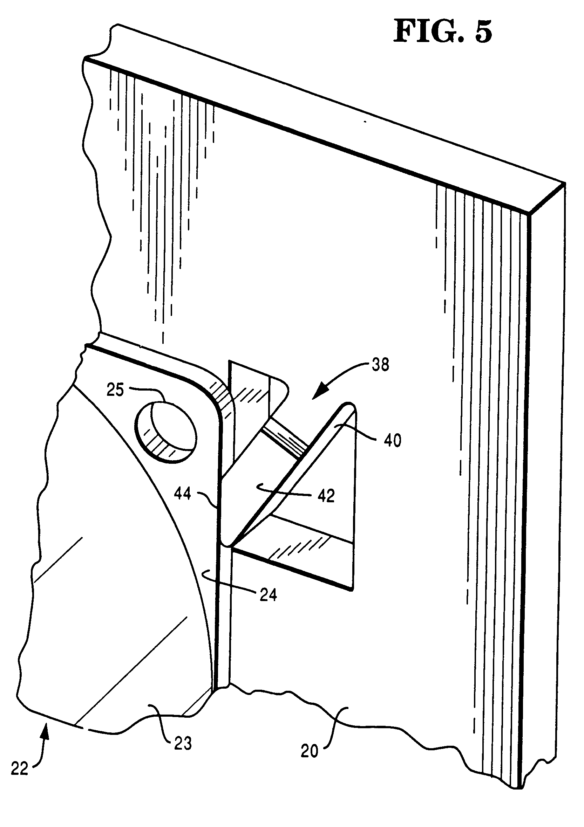

A stop member 38 is shown as being formed integrally with the housing 20, although it could be made separately and attached to the housing 20, if desired. As best shown in Fig. 5, the stop member 38 takes the form of a finger 40 which is spaced from the surrounding material of the housing 20 on three sides and which extends at an angle, with respect to the fixed position of the flange 24, from its point of attachment to the housing 20. The finger 40 includes a portion 42 which extends outwardly of the plane of the flat surface of the housing 20 to a position in which an end surface 44 thereon will engage an edge of the flange 24 and act as a stop therefor.

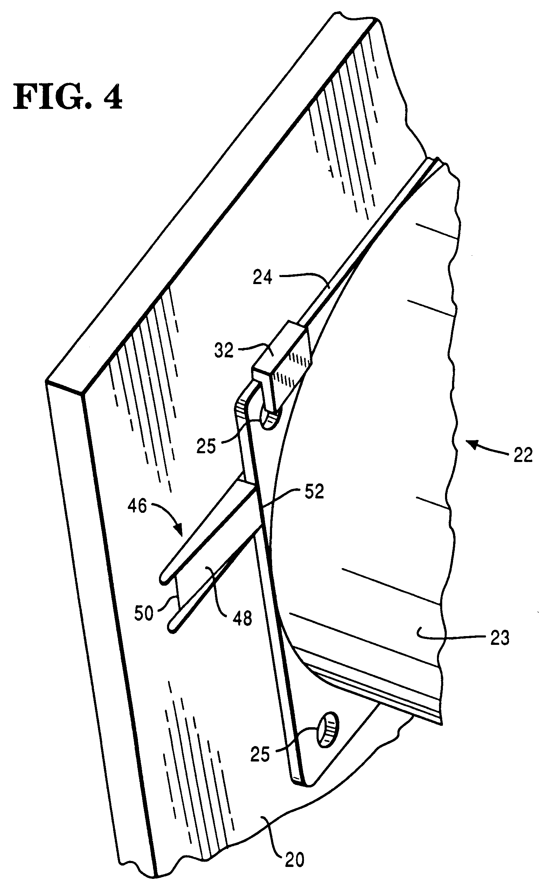

A latch member 46 is also shown as being formed integrally with the housing 20, although it could be made separately and attached to said housing. As best shown in Fig. 4, the latch member takes the form of a finger 48 which is spaced from the surrounding material of the housing 20 on three sides, and which in its normal attitude is angled outwardly with respect to the plane of the surrounding surface of the housing 20. The finger 48 is connected to the remainder of the housing 20 by a natural hinge 50 which is resilient due to the plastic material from which the housing 20 is formed. Due to the resiliency of the hinge 50, the finger 48 may be depressed so that its outer surface is in the same plane as the surrounding outer surface of the housing 20. The finger 48 has an end surface 52 which is adapted to engage with one end of the flange 24 of the motor 22 to hold said flange and said motor in a fixed position with respect to the housing 20, as will subsequently be described.

Attaching the motor 22 to the housing 20 is accomplished by first rotating it approximately 20 degrees anticlockwise from horizontal, to the position shown in Fig. 1. The motor flange 24 is then pressed against the finger 48 of the latch member 46, depressing said finger. Once the finger 48 is depressed, the motor 20, with associated flange 24, is rotated clockwise to the position shown in Fig. 2, in which the flange 24 seats against the clips 32 and 34 and the stop finger 38. In this position, the flange 24 no longer depresses the finger 48, and said finger snaps outwardly so that its end surface 52 catches the adjacent edge of the flange 24. The finger 42 applies a force against the opposite edge of the flange 24, thus capturing the flange 24 between the fingers 42 and 48, and preventing movement of the motor 22 and associated flange with respect to the housing 20.

If it is desired to remove the motor 22 from the housing 20, the finger 48 is depressed and the motor 22 and associated flange 24 are rotated 20 degrees back to the position of Fig. 1, after which the motor 22 may be removed from the housing 20.

While the form of the invention shown and described herein is admirably adapted to fulfill the objects primarily stated, it is to be understood that it is not intended to confine the invention to the form or embodiment disclosed herein, for it is susceptible of embodiment in various other forms within the scope of the appended claims.

## Claims

1. Apparatus for securing a device (22) to a support member (20) having a planar receiving surface, said device including a mounting flange (24) having first and second opposed edges and third and fourth opposed edges, characterized in that said support member includes first and second retaining means (32,34) on said support member for respectively receiving and retaining said first and second opposed edges, a stop member (38) on said support member for limiting movement of said mounting flange with respect to said support member, and a resilient latch member (46) on said support member which normally projects outwardly from the plane of said receiving surface of said support member, but which is arranged to be depressed by engagement with said mounting flange to enable said mounting flange to move thereover, whereby said mounting flange may be placed on said planar receiving surface of said support member so as to depress said latch member and then moved, while engaged with said receiving surface, to a fixed position at which said first and second opposed edges are received and retained by said first and second retaining means, and said flange is held against further movement in a first direction by said third edge engaging said stop member (38), said mounting flange being arranged to move past said resilient latch member (46) when moved to said fixed position so as to enable said latch member to snap outwardly and thereby hold said flange against movement in a direction opposite to said first direction by engagement of said latch member with said fourth edge.

2. Apparatus according to claim 1, characterized in that said first and second retaining means (32,34) are offset with respect to each other in said first direction, whereby said first and second opposed edges may be brought into engagement with said first and second retaining means by rotating said mounting flange relative to said receiving surface while engaged therewith.

3. Apparatus according to claim 1 or claim 2, characterized in that said first and second retaining means are brackets (32,34) which are generally L-shaped to enable said first and second opposed edges of said mounting flange to be positioned under a respective bracket and to be retained thereby.

4. Apparatus according to claims 1, 2 or 3, characterized in that said stop member (38) is an integral part of the support member (20) and includes an end surface (44) which is adapted to engage said third edge of said mounting flange.

5. Apparatus according to claim 4, characterized in that said stop member (38) is in the shape of a finger (42) which extends at an angle to said third edge of said mounting flange in its fixed position.

6. Apparatus according to any preceding claim, characterized in that said resilient latch member (46) is integral with said support member (20).

7. Apparatus according to any preceding claim, characterized in that said device (22) is an electric motor.

8. Apparatus according to any preceding claim, characterized in that said support member (20) is a printer housing.

## Patentansprüche

1. Vorrichtung zur Befestigung eines Geräts (22) an einer Stütze (20) mit einer ebenen Aufnahmefläche, wobei dieses Gerät einen Befestigungsflansch (24) mit ersten und zweiten gegenüberliegenden Kanten und dritten und vierten gegenüberliegenden Kanten aufweist, dadurch gekennzeichnet, daß die genannte Stütze eine erste und zweite Halterung (32, 34) auf dieser zur jeweiligen Aufnahme und Halterung der genannten ersten und zweiten gegenüberliegenden Kanten aufweist, einen Anschlag (38) auf der genannten Stütze zur Bewegungsbegrenzung des genannten Befestigungsflansches in bezug auf die genannte Stütze und eine federnde Schnappvorrichtung (46) an der genannten Stütze, die normalerweise über die Ebene der genannten Aufnahmefläche der genannten Stütze vorsteht, die jedoch bei Kontakt mit dem genannten Befestigungsflansch eingedrückt werden kann, um die Bewegung des genannten Befestigungsflansches darüber zu ermöglichen, wobei der genannte Befestigungsflansch auf die glatte Aufnahmefläche der genannten Stütze gesetzt werden kann, um die Schnappvorrichtung einzudrücken und danach bei Kontakt mit der Aufnahmefläche in eine feste Position bewegt werden kann, in der die ersten und zweiten gegenüberliegenden Kanten von der genannten ersten und zweiten Halterung aufgenommen und gehalten werden und wobei der Kontakt einer dritten Kante mit einem Anschlag (38)den genannten Flansch an der Bewegung in eine erste Richtung hindert, wobei der genannte Befestigungsflansch so angeordnet ist, daß bei Bewegung in die genannte feste Position über die genannte federnde Schnappvorrichtung (46) bewegt werden zu können, so daß die Schnappvorrichtung herausschnappen kann und dadurch den genannten Flansch an der Bewegung in eine Richtung entgegengesetzt zur ersten Richtung hindert, indem die genannte Schnappvorrichtung eine vierte Kante hält.

2. Vorrichtung gemäß Anspruch 1, dadurch gekennzeichnet, daß die genannte erste und zweite Halterung (32,34) zueinander in der genannten ersten Richtung versetzt sind, wobei die genannten ersten und zweiten gegenüberliegenden Kanten in die genannte erste und zweite Halterung geschoben werden können, indem der genannte Befestigungsflansch bei Kontakt mit der genannten Aufnahmefläche relativ zu dieser gedreht wird.

3. Vorrichtung gemäß Anspruch 1 oder Anspruch 2, dadurch gekennzeichnet, daß die genannten ersten und zweiten Halterungen allgemein L-förmige Stützen (32,34) sind, so daß die genannten ersten und zweiten Kanten des genannten Halteflansches in eine entsprechende Klammer positioniert und durch diese gehalten werden können.

4. Vorrichtung gemäß Anspruch 1, 2 oder 3, dadurch gekennzeichnet, daß der genannte Anschlag (38) integraler Bestandteil der Stütze (20) ist und eine Endfläche (44) aufweist, die den Kontakt mit der genannten dritten Kante des genannten Befestigungsflansches bewirkt.

5. Vorrichtung gemäß Anspruch 4, dadurch gekennzeichnet, daß der Anschlag (38) ein Finger (42) ist, der in der festen Position im Winkel zur dritten Kante des Befestigungsflansches verläuft.

6. Vorrichtung gemäß jedem der vorstehenden Ansprüche, dadurch gekennzeichnet, daß die genannte federnde Schnappvorrichtung (46) integraler Bestandteil der genannten Schnappvorrichtung (20) ist.

7. Vorrichtung gemäß jedem der vorstehenden Ansprüche, dadurch gekennzeichnet, daß das Gerät (22) ein Elektromotor ist.

8. Vorrichtung gemäß jedem der vorstehenden Ansprüche, dadurch gekennzeichnet, daß die genannte Stütze (20) ein Druckergehäuse ist.

## Revendications

1. Un appareil pour la fixation d'un dispositif (22) à un élément de support (20), ayant une surface de réception planaire, ledit dispositif comportant une bride de montage (24) ayant des premier et deuxième bords opposés et des troisième et quatrième bords opposés, caractérisé en ce que ledit élément de support comporte des premier et deuxième moyens de retenue (32, 34) sur ledit élément de support pour recevoir et retenir respectivement lesdits premier et deuxième bords opposés, un élément butée (38) sur ledit élément de support pour limiter le déplacement de ladite bride de montage relativement audit élément de support, et un élément de verrouillage élastique (46) sur ledit élément de support qui fait normalement saillie par rapport au plan de ladite surface de réception dudit élément de support, mais qui est arrangé pour être enfoncé par engagement avec ladite bride de montage pour permettre à ladite bride de montage d'y passer, permettant ainsi à ladite bride de montage d'être placée sur ladite surface de réception planaire dudit élément de support de façon à déprimer ledit élément de verrouillage, puis d'être déplacée, pendant qu'elle est engagée avec ladite surface de réception, à une position fixe à laquelle les premier et deuxième bords opposés sont reçus et retenus par lesdits premier et deuxième moyens de retenue, et ladite bride est maintenue pour empêcher tout autre déplacement dans un premier sens par l'engagement par ledit troisième bord dudit élément butée (38), ladite bride de montage étant arrangée pour aller au-delà dudit élément de verrouillage élastique (46) lors de son déplacement à ladite position fixe de façon à permettre audit élément de verrouillage de revenir avec un coup sec vers l'extérieur et de maintenir ainsi ladite bride pour empêcher le déplacement dans un sens contraire audit premier sens par l'engagement dudit élément de verrouillage avec ledit quatrième bord.

2. Un appareil conformément à la revendication 1, caractérisé en ce que lesdits premier et deuxième moyens de retenue (32, 34) sont décalés l'un par rapport à l'autre dans ledit premier sens, grâce à quoi lesdits premier et deuxième bords opposés peuvent être mis en engagement avec lesdits premier et deuxième moyens de retenue en tournant ladite bride de montage par rapport à ladite surface de réception lorsque ladite bride de montage est engagée avec ladite surface de réception.

3. Un appareil conformément à la revendication 1 ou à la revendication 2, caractérisé en ce que lesdits premier et deuxième moyens de retenue 34) sont des pattes (32, 34) qui sont généralement en L pour permettre auxdits premier et deuxième bords opposés de ladite bride de montage d'être positionnés sous une patte respective et d'être retenus par cette dernière.

4. Un appareil conformément aux revendications 1, 2 ou 3, caractérisé en ce que ledit élément butée (38) est solidaire de l'élément de support (20) et comporte une surface d'extrémité (44) qui est adaptée pour s'engager avec ledit troisième bord de ladite bride de montage.

5. Un appareil conformément à la revendication 4, caractérisé en ce que ledit élément butée (38) a la forme d'un doigt (42) qui fait saillie en biais par rapport audit troisième bord de ladite bride de montage dans sa position fixe.

6. Un appareil conformément à l'une quelconque des revendications précédentes, caractérisé en ce que ledit élément de verrouillage élastique (46) est solidaire dudit élément de support (20).

7. Un appareil conformément à l'une quelconque des revendications précédentes, caractérisé en ce que ledit dispositif (22) est un moteur électrique.

8. Un appareil conformément à l'une quelconque des revendications précédentes, caractérisé en ce que ledit élément de support (20) est un boîtier d'imprimante.
